# EUROPÄISCHE PATENTSCHRIFT

(11) **EP 2 405 258 B1**
(45) Veröffentlichungstag und Bekanntmachung des Hinweises auf die Patenterteilung: **05.09.2018**
(21) Anmeldenummer: 11075165.8
(22) Anmeldetag: 08.07.2011
(51) Int. Cl.: G01N 21/3563, G01N 21/359, G01N 21/84

(54) **Trainingsverfahren für einen adaptiven Auswertealgorithmus, ein hyperspektrales Messgerät, sowie eine Vorrichtung zum Ausbringen eines Betriebsmittels**
Training method for an adaptive evaluation algorithm, hyperspectral measuring device and device for applying an operating material
Procédé de formation pour un algorithme adaptatif d'évaluation, un appareil d'hyperspectroscopie, ainsi que dispositif de distribution de moyens de production

(30) Priorität: 09.07.2010 DE 102010027144
(43) Veröffentlichungstag der Anmeldung: 11.01.2012
(73) Patentinhaber: Fraunhofer-Gesellschaft zur Förderung der angewandten Forschung e.V., 80686 München (DE)
(72) Erfinder: Seiffert, Udo, 38892 Harsleben (DE); Bollenbeck, Felix, 06108 Halle (DE)
(74) Vertreter: Pfenning, Meinig & Partner mbB

(56) Entgegenhaltungen:
- WO-A1-2007/041755
- WO-A1-2007/106942
- US-A- 5 900 634
- US-B1- 7 058 197
- "Hyperspectral Remote sensing and Vegetation Chemical Composition : Looking towards the Future"; "Kapitel 9" In: J.G. FERWERDA: "Charting the Quality of Forage. Mapping and Measuring the variation of Chemical Components in Foliage with Hyperspectral Remote Sensing.", 2005, Entschede, NL, XP002669986, ISBN: 90-8504-209-7 Seiten 111-130, * Seiten 115-118 *
- UDO SEIFFERT ET AL: "Clustering of crop phenotypes by means of hyperspectral signatures using artificial neural networks", HYPERSPECTRAL IMAGE AND SIGNAL PROCESSING: EVOLUTION IN REMOTE SENSING (WHISPERS), 2010 2ND WORKSHOP ON, IEEE, PISCATAWAY, NJ, USA, 14. Juni 2010 (2010-06-14), Seiten 1-4, XP031770671, ISBN: 978-1-4244-8906-0
- NOH H ET AL: "A Neural Network Model of Maize Crop Nitrogen Stress Assessment for a Multi-spectral Imaging Sensor", BIOSYSTEMS ENGINEERING, ACADEMIC PRESS, UK, Bd. 94, Nr. 4, 1. August 2006 (2006-08-01) , Seiten 477-485, XP024970563, ISSN: 1537-5110, DOI: 10.1016/J.BIOSYSTEMSENG.2006.04.009 [gefunden am 2006-08-01]

## Beschreibung

Die Erfindung betrifft ein Trainingsverfahren für einen adaptiven Auswertealgorithmus gemäß dem Oberbegriff des Hauptanspruchs, insbesondere für ein künstliches neuronales Netzwerk, zur Bestimmung von Stoffkonzentrationen in mindestens einer Pflanze anhand von hyperspektralen Bilddaten der mindestens einen Pflanze. Die Erfindung betrifft ferner ein hyperspektrales Messgerät mit einer Auswerteeinheit, die mit diesem Trainingsverfahren kalibriert worden ist. Die Erfindung betrifft außerdem eine Vorrichtung zum Ausbringen eines Betriebsmittels umfassend ein derartiges Messgerät.

Hyperspektrale Messgeräte eignen sich zum Erfassen von Bildern und Erzeugen von hyperspektralen Bilddaten, die eine Vielzahl eng beieinander liegende Frequenzbänder beinhalten. Solche Messgeräte werden insbesondere in der Landwirtschaft eingesetzt, um aus den Reflexionseigenschaften von angebauten Pflanzen über die Berechnung von Vegetationsindizes Aussagen über den Gesundheitsstatus der Pflanzen abzuleiten. Viele dieser Indizes sind als Differenzen und/oder Quotienten von Intensitätswerten verschiedener Frequenzbänder berechnet, wie etwa der Normalisierter Differenzierte Vegetationsindex (NDVI).

Hyperspektrale Messgeräte werden auch verwendet, um Konzentrationen von Stoffen innerhalb von Pflanzen zu bestimmen. So ist etwa aus der Druckschrift "Charting the quality of forage: measuring and mapping the variation of chemical components in foliage with hyperspectral remote sensing", Kapitel 9, Ferwerda, J.G, Wageningen University, 2005, bekannt, dass Tannine und Polyphenole in Pflanzen innerhalb eines gegebenen Gebietes aus hyperspektralen Bilddaten dieses Gebietes mittels eines adaptiven Auswertealgorithmus in Form eines künstlichen neuronalen Netzwerkes (eines Mehrschichtperzeptrons mit einer versteckten Schicht) berechnet werden können. Es wird dort beschrieben, dass das Netzwerk anhand von Trainingsfällen trainiert wird (überwachtes Lernverfahren), wobei die Trainingsfälle jeweils durch einen Eingangsvektor und einen Ausgangsvektor gegeben sind. Die Ausgangsvektoren enthalten die beiden Konzentrationen der genannten Stoffe, die in Pflanzen mittels chemischer Analysen gemessen wurden, wobei die Pflanzen zufällig ausgewählt wurden. Die Eingangsvektoren enthalten aus einem hyperspektralen Bild des Gebietes solche Bilddaten, die den Standorten dieser Pflanzen zugeordnet werden. Dabei werden in die Eingangsvektoren Intensitätswerte von sieben verschiedenen Frequenzbändern übernommen, die für die beiden Stoffgruppen besonders aussagekräftig sind.

Das neuronale Netzwerk wird anschließend durch Fehlerrückführung (Backpropagation) für die Trainingsfälle optimiert (Optimierung der Parameter des Netzwerks). Mit den somit optimierten Parametern des Netzwerks ist das Netzwerk in der Anwendungsphase geeignet, aus Eingangsvektoren (hyperspektrale Bilddaten), die von den ursprünglich gelernten Eingangsvektoren der Trainingsfälle abweichen, sinnvolle Ausgangsvektoren (Stoffkonzentrationen) zu bestimmen.

Ein Nachteil des beschriebenen Auswertealgorithmus ist, dass er nur eine relativ grobe Klassifizierung des Pflanzenzustands anhand von zwei Stoffkonzentrationen zulässt. Andererseits stellt es sich als schwierig heraus, mit dem beschriebenen Trainingsverfahren ein künstliches neuronales Netzwerk zur Bestimmung einer größeren Anzahl von Stoffkonzentrationen in der Pflanze zu kalibrieren, um genauere Aussagen über den physiologischen Zustand treffen zu können. Ebenso sind die bekannten Vegetationsindizes zu ungenau, um den Gesundheitszustand von Pflanzen für landwirtschaftliche Zwecke mit befriedigender Genauigkeit und Sicherheit bestimmen zu können.

Es ist daher die Aufgabe der vorliegenden Erfindung, ein Trainingsverfahren für einen adaptiven Auswertealgorithmus, insbesondere für ein künstliches neuronales Netzwerk, vorzuschlagen, welches es ermöglicht, den Auswertealgorithmus zu kalibrieren für eine möglichst sichere und genaue Bestimmung einer möglichst großen Anzahl von Stoffkonzentrationen in einer Pflanze anhand von hyperspektralen Bilddaten der Pflanze. Dabei soll die erreichbare Genauigkeit und Anzahl der so ermittelbaren Stoffkonzentrationen es ermöglichen, für landwirtschaftliche Anwendungen hinreichend genaue Aussagen des physiologischen Zustands von Nutzpflanzen treffen zu können. Desweiteren soll ein hyperspektrales Messgerät vorgeschlagen werden, das geeignet ist, eine möglichst große Anzahl von Stoffkonzentrationen in einer Pflanze anhand von hyperspektralen Bilddaten der Pflanze möglichst genau zu bestimmen. Wiederum soll die Genauigkeit und Zuverlässigkeit das Messgerät für landwirtschaftliche Anwendungen ausreichen. Schließlich soll eine Vorrichtung zum Austragen eines Betriebsmittels, insbesondere eines Düngemittels, eines Pflanzenschutzmittels oder von Wasser vorgeschlagen werden, welches sich dazu eignet, das Betriebsmittel automatisch in einer Menge und Konzentration auszutragen, wie es ein momentaner physiologischer Zustand von Pflanzen erfordert.

Diese Aufgabe wird erfindungsgemäß gelöst durch ein Trainingsverfahren gemäß dem Hauptanspruch 1, ein hyperspektrales Messgerät gemäß Anspruch 7 und eine Vorrichtung zum Austragen eines Betriebsmittel gemäß Anspruch 15. Weiterentwicklung und Ausführungsformen der Erfindung sind Gegenstand der weiteren abhängigen Ansprüche.

Demnach ist vorgesehen, dass bei dem erfindungsgemäßen Trainingsverfahren für einen vorzugsweise mit einem hyperspektralen Messgerät durchführbaren adaptiven Auswertealgorithmus, insbesondere für ein künstliches neuronales Netzwerk, zur Bestimmung von Stoffkonzentrationen in mindestens einer Pflanze unter Verwendung von, vorzugsweise mit einer Kamera des Messgerätes erzeugten, hyperspektralen Bilddaten der mindestens einen Pflanze, Parameter des adaptiven Auswertealgorithmus unter Verwendung einer Vielzahl von Trainingsfällen kalibriert werden, wobei jeder dieser Trainingsfälle gegeben ist durch einen Eingangsvektor, der Bilddaten eines hyperspektralen Bildes einer zu dem Trainingsfall gehörigen Testpflanze beinhaltet, und einen Ausgangsvektor, der durch mittels einer chemischen Analyse bestimmte Stoffkonzentrationen innerhalb dieser zu dem Trainingsfall gehörigen Testpflanze gegeben ist. Dabei wird jeder einzelne der Trainingsfälle erzeugt, indem zunächst die zu dem Trainingsfall gehörige Testpflanze in einen vorbestimmten physiologische Zustand geführt wird und anschließend, vorzugsweise mit der Kamera des Messgerätes, ein hyperspektrales Bild der Testpflanze erzeugt wird sowie eine chemische Analyse zur Messung der Stoffkonzentrationen in der Testpflanze durchgeführt wird, wobei Bilddaten des hyperspektralen Bildes der Testpflanze in den Eingangsvektor des Trainingsfalls übertragen werden und die Stoffkonzentrationen der mindestens einen Testpflanze in den Ausgangsvektor des Trainingsfalls übertragen werden.

Bei den genannten Stoffkonzentrationen handelt es sich jeweils um Stoffkonzentrationen von Nährstoffen, sogenannten Substraten. Die Stoffkonzentration zumindest eines dieser Nährstoffe in den Pflanzen bzw. in den Testpflanzen ist so gering, dass die direkten Einflüsse dieses Nährstoffs auf die von der Pflanze oder der Testpflanze ausgehende, also beispielsweise reflektierte oder gestreute, elektromagnetische Strahlung unterhalb einer Empfindlichkeit der Kamera des Messgerätes liegt. In diesem Fall haben die Wechselwirkungen zwischen der auf die Pflanze einfallenden elektromagnetischen Strahlung, wie etwa Sonnenlicht, und diesem Nährstoff eine nur so geringe Intensität, dass diese Wechselwirkungen, wie etwa Reflexion oder Absorption durch den Nährstoff, von der Kamera des Messgerätes nicht gemessen oder detektiert werden können, da diese Wechselwirkungen die hyperspektralen Bilddaten der Kamera nicht erkennbar beeinflussen. In einem solchen Fall ist die Empfindlichkeit der verwendeten Kamera also zu gering, um eine Messung der Wechselwirkung zwischen der auf die Pflanze einfallenden elektromagnetischer Strahlung und den Nährstoffen innerhalb der Pflanze bzw. Testpflanze zu ermöglichen.

Um auch solch niedrige Stoffkonzentrationen von Nährstoffen bestimmen zu können, sieht das hier vorgeschlagene Trainingsverfahren vor, den adaptiven Auswertealgorithmus unter Verwendung der bereits oben genannten Trainingsfälle zu kalibrieren.

Das erfindungsgemäße Trainingsverfahren unterscheidet sich also vom Stand der Technik durch die Art der Erzeugung der Trainingsfälle. Es ist vorgesehen, dass Testpflanzen gezielt in bestimmte physiologische Zustände geführt werden. Dies kann beispielsweise dadurch erreicht werden, dass den Testpflanzen für einen bestimmten Zeitraum planmäßig vorbestimmte Mengen an Wasser und/oder eines Düngemittels gegeben wird. Dabei kann auch die Zusammensetzung des Düngemittels vorgegeben sein. Beispielsweise ist es möglich, Konzentrationen eines oder mehrerer der oben genannten Nährstoffe in dem Düngemittel zu variieren. Ferner ist es möglich zur Einstellung eines gewünschten physiologischen Zustands eine Testpflanze mit Pflanzenschutzmitteln zu behandeln oder beispielsweise einem Schädlingsbefall oder Pilzbefall auszusetzen.

Auf diese Weise ist es möglich, stark unterschiedliche Stoffkonzentrationen in den Testpflanzen zu erzeugen. Die so erzeugbaren Stoffkonzentrationen haben eine besonders große Variabilität. Dadurch können Trainingsfälle mit Stoffkonzentrationen, die gleichmäßig im anwendungsgemäßen Wertebereich der Stoffkonzentrationen verteilt vorliegen, erzeugt werden sowie bei Bedarf auch extreme Trainingsfälle mit extremen Stoffkonzentrationen, wodurch der adaptive Algorithmus in der Anwendungsphase besonders genau und besonders sicher unterschiedliche Stoffkonzentrationen erkennen kann, insbesondere auch extreme Stoffkonzentrationen in Pflanzen in extremen physiologischen Zuständen. Im Vergleich hierzu ist in bekannten Trainingsverfahren die Unterschiedlichkeit der Trainingsfälle alleine durch die natürliche Variabilität der physiologischen Zustände von Pflanzen gegeben. Diese ist meistens viel geringer als die Variabilität der Trainingsfälle des erfindungsgemäßen Trainingsverfahrens. Folglich eignet sich ein Auswertealgorithmus, der mit einem derartigen herkömmlichen Trainingsverfahren kalibriert ist, nicht zur Messung extremer, Stoffkonzentrationen in einer Pflanze, insbesondere extrem geringer Stoffkonzentrationen unterhalb der Empfindlichkeit des Kamera wie oben beschrieben, und ist weniger zuverlässig und weniger genau als ein Auswertealgorithmus, der mittels des erfindungsgemäßen Trainingsverfahren kalibriert worden ist.

Daher ist es im Stand der Technik üblich, sich auf die Bestimmung von Stoffkonzentrationen solcher Stoffe zu beschränken, deren Wechselwirkung mit Sonnenlicht sich aufgrund der hohen Konzentration dieser Stoffe in den Pflanzen durch stoffspezifische spektrale Signaturen direkt in den hyperspektralen Bilddaten widerspiegelt, wie etwa Chlorophyll. Dabei ist es notwendig, diese stoffspezifischen spektralen Signaturen und die hyperspektralen Reflexionseigenschaften der Nährstoffe vorab zu kennen. Für die Anwendung des hier vorgeschlagene Trainingsverfahrens ist es vorteilhafterweise nicht erforderlich, hyperspektrale Reflexionseigenschaften der Nährstoffe zu kennen. Statt dessen wird ausgenutzt, dass die Stoffwechselprozesse in einer Pflanze von den Stoffkonzentrationen der Nährstoffe abhängig sind, so dass sich bei unterschiedlichen Stoffkonzentrationen von Nährstoffen auch unterschiedliche Stoffkonzentrationen anderer an den Stoffwechselprozessen beteiligter Stoffe, insbesondere Stoffwechselprodukte oder Metabolite, wie etwa Proteine, einstellen. Werden, wie hier vorgeschlagen, Testpflanzen zur Erzeugung von Trainingsfällen gezielt in bestimmte physiologische Zustände geführt, so beeinflussen diese weiteren Stoffe die hyperspektralen Eigenschaften der Testpflanzen so stark, dass der Auswertealgorithmus auch zur Bestimmung der Stoffkonzentrationen der Nährstoffe kalibriert (trainiert) werden kann, selbst wenn deren direkter Einfluss auf das von der Pflanze ausgehende Licht unterhalb der Empfindlichkeit der Kamera des Messgerätes liegt.

Typischerweise besteht gerade ein Interesse an der Kenntnis der Stoffkonzentrationen genau dieser Nährstoffe, weil diese zum einen die Stoffwechselprozesse der Pflanze entscheidend mitbestimmen und es zum anderen gerade diese Nährstoffe sind, deren Stoffkonzentrationen direkt über eine entsprechende Düngerzufuhr gezielt steuerbar sind, vorausgesetzt die Stoffkonzentrationen innerhalb der Pflanzen sind hinreichend genau bekannt.

Bei den Nährstoffen, deren direkter Einfluss auf die von der Pflanze oder Testpflanze ausgehende Strahlung typischerweise unterhalb der Empfindlichkeit hyperspektraler Kameras liegt, handelt es sich beispielsweise um chemische Elemente handeln, wie etwa Phosphor (P), Kalium (K), Magnesium (Mg), Kalzium (Ca), Schwefel (S), Kupfer (Cu), Bor (B), Eisen (Fe), Selen (Se), Natrium (Na), Zink (Zn) und/oder Molybdän (Mo).

Es ist selbstverständlich möglich, auch solche Nährstoffe in dem hier vorgeschlagenen Trainingsverfahren zu berücksichtigen, deren Stoffkonzentrationen so hoch sind, dass deren direkter Einfluss auf das von Pflanze ausgehende Licht mit der Kamera direkt detektiert werden kann, wie etwa Stickstoffverbindungen oder Chlorophyll.

Vorzugsweise werden als Testpflanzen Pflanzen einer einzelnen (biologischen) Pflanzensorte verwendet. Damit kann der Auswertealgorithmus spezifisch für diese eine Pflanzenart kalibriert werden. Auf diese Weise lässt sich eine besonders hohe Genauigkeit und Sicherheit des Auswertealgorithmus für diese Pflanzenart erzielen.

Ein weiterer wesentlicher Vorteil des erfindungsgemäßen Trainingsverfahrens ist, dass es durch die gezielt eingestellten physiologischen Zustände der Testpflanzen und die dadurch erzielte hohe Variabilität der Stoffkonzentrationen in den Testpflanzen nicht auf nur einzelne Frequenzbänder oder wenige Stoffkonzentrationen beschränkt ist, wie es im Stand der Technik üblicher Weise der Fall ist, sondern dass vorteilhafterweise ein gesamter Frequenzbereich eines hyperspektralen Bildes ausgenutzt werden kann. Es ist also auch für adaptive Auswertealgorithmen mit beliebig hochdimensionalen Eingangsvektoren und Ausgangsvektoren geeignet, welche sich aufgrund ihrer hohen Dimensionalität durch eine besonders große erzielbare (trainierbare) Genauigkeit und Sicherheit auszeichnen. Ferner lässt sich mit dem vorgeschlagenen Trainingsverfahren, wie weiter unten beschrieben wird, besonders leicht eine hinreichend große Anzahl von Trainingsfällen erzeugen. Insbesondere zum Trainieren hochdimensionaler adaptiver Auswertealgorithmen ist in der Regel eine sehr hohe Anzahl von Trainingsfällen notwendig.

In einer Weiterentwicklung des erfindungsgemäßen Trainingsverfahrens ist vorgesehen, dass mehrere für die Erzeugung der Trainingsfälle bestimmte Testpflanzen auf einem Testfeld angeordnet werden und den Testpflanzen Koordinaten in einem Koordinatensystem zugeordnet werden, wobei die Testpflanzen unter Verwendung der Koordinaten innerhalb eines hyperspektralen Bildes der Testpflanzen identifiziert werden. Auf diese Weise können die Testpflanzen auf einem Testfeld unter vorgegeben Bedingungen bezüglich Bewässerung und Düngung angebaut werden und in unterschiedlichen Wachstumsstadien und physiologischen Zuständen mit einer hyperspektralen Kamera erfasst werden. Die Identifizierung der Pflanzen auf den so erzeugten hyperspektralen Bildern ist über die Koordinaten besonders sicher und genau möglich.

In einer weiteren Ausführungsform ist vorgesehen, dass ein für eine chemische Analyse bestimmter Pflanzenteil einer Testpflanze, insbesondere ein Blatt, eine Blüte oder eine Frucht der Testpflanze, mit einer Markierung versehen wird. Auf diese Weise können zu einem späteren Zeitpunkt die in dem Pflanzenteil gemessenen Stoffkonzentrationen unter Verwendung einer entsprechenden Beschriftung auf der Markierung sicher und ohne Verwechslungsgefahr der Testpflanze zugeordnet werden. Ferner lässt sich der so markierte Pflanzenteil innerhalb eines hyperspektralen Bildes der Testpflanze unter Verwendung der in dem Bild erkennbaren Markierung sicher identifizieren. Insbesondere kann die Markierung eine maschinenlesbare Beschriftung aufweisen, so dass mit einer entsprechend eingerichteten Bildverarbeitungseinheit der Pflanzenteil automatisch erkannt werden kann, wodurch sich das Verfahren besonders einfach, genau und schnell durchführen lässt.

In einer Weiterentwicklung des Trainingsverfahrens ist vorgesehen, dass mittels einer Bildverarbeitungseinheit in einem hyperspektralen Bild einer Testpflanze ein Pflanzenteil dieser Testpflanze erkannt wird, insbesondere ein Blatt, eine Blüte oder eine Frucht dieser Testpflanze, und aus Bilddaten, die diesem Pflanzenteil zugeordnet sind, eine Vielzahl von Eingangsvektoren gebildet wird. Dabei ist es möglich, dass aus einem jeden der diesem Pflanzenteil zugeordneten hyperspektralen Bildpunkte (Pixel) ein Eingangsvektor gebildet wird. Dabei sind die Komponenten eines solchen Eingangsvektors durch die Intensitätswerte der aufgenommen Spektralbänder des zugehörigen Bildpunkts gegeben. Ferner ist vorgesehen, dass aus den Stoffkonzentrationen, die in diesem Pflanzenteil mittels einer chemischen Analyse gemessen werden, ein Ausgangsvektor gebildet wird und dass anschließend jeder der Eingangsvektoren mit diesem Ausgangsvektor zu jeweils einem Trainingsfall kombiniert wird. Auf diese Weise können aus dem von der einzelnen Testpflanze abgetrennten und chemisch analysierten Pflanzenteil eine große Anzahl von Trainingsfällen erzeugt werden.

Gehören in dem hyperspektralen Bild beispielsweise eine Million Bildpunkte zu dem Pflanzenteil, lassen sich aus diesen Bildpunkten eine Million Trainingsfälle erzeugen. Natürlich ist es ebenso möglich, mehrere Pflanzenteile der Testpflanze (oder auch die gesamte Pflanze) chemisch zu analysieren und entsprechende Trainingsfälle zu erzeugen.

In einer Weiterentwicklung ist vorgesehen, dass während des Trainingsverfahrens und/oder während der Anwendungsphase des mit dem Trainingsverfahren kalibrierten Auswertealgorithmus eine spektrale Belichtungskorrektur des mit der Kamera des hyperspektralen Messgerätes erfassten hyperspektralen Bildes der Pflanze bzw. der Testpflanze durchgeführt wird, bei der momentan vorliegende Belichtungsbedingungen der Pflanzen bzw. der Testpflanzen gemessen und durch eine Normalisierung der hyperspektralen Bildpunkte des Bildes des der Pflanze bzw. Testpflanze praktisch zeitgleich ausgeglichen werden. Durch die spektrale Belichtungskorrektur werden neben der Belichtungsintensität einzelner hyperspektraler Bildpunkte des Bildes auch die spektrale Zusammensetzung der Bilddaten dieser Bildpunkte normalisiert.

Die momentanen Belichtungsbedingungen sind im Freien typischerweise bestimmt durch den Sonnenstand und den Eintreffwinkel der Sonnenstrahlung auf die Pflanzen bzw. Testpflanzen, die Atmosphäre und Witterungsbedingungen.

Bei der spektralen Belichtungskorrektur kann vorgesehen sein, dass innerhalb eines durch die Kamera des Messgerätes erfassten Raumbereich vorzugsweise permanent ein als spektraler Reflexionsstandard dienender Körper angeordnet wird, dessen Oberfläche vorgegebene optische Eigenschaften aufweist, wie beispielsweise einen bestimmten Farb- oder Grauton und/oder eine bestimmte Helligkeit. Dieser vorzugsweise flächig ausgeformte Körper, der im Folgenden auch als Referenzkörper bezeichnet wird, ist vorzugsweise starr mit der Kamera des Messgerätes verbunden, so dass er sich stets in einer festen Lage relativ zur Kamera und in einer festen Position innerhalb des von der Kamera erfassten Raumbereiches befindet, vorzugsweise an einem Rand dieses Raumbereichs.

Es kann ferner vorgesehen sein, dass mindestens ein bestimmter, vorzugsweise fest vorgegebener Bildpunkt (Pixel) des von der Kamera erfassten Bildes der Pflanze oder Testpflanze für die spektrale Belichtungskorrektur verwendet wird. Vorzugsweise befindet sich dieser auch als Referenzbildpunkt bezeichnete Bildpunkt in einem Randbereich des Bildes. Es können unter Verwendung der hyperspektralen Bilddaten dieses mindestens einen Referenzbildpunktes hyperspektrale Bilddaten weiterer Bildpunkte dieses Bildes, die von diesem mindestens einen Referenzbildpunkt verschieden sind, normalisiert werden. Es können zur Reduzierung des Rechenaufwandes nur die Bilddaten genau solcher Bildpunkte des Bildes normalisiert werden, die als Eingangsvektoren für die Erzeugung von Trainingsfällen in der Trainingsphase oder für die Bestimmung der Stoffkonzentrationen in der Anwendungsphase herangezogen werden. Es kann aber auch vorgesehen sein, dass die Bilddaten aller Bildpunkte des Bildes, die von diesem mindestens einen Referenzbildpunkt verschieden sind, normalisiert werden, wodurch gegebenenfalls eine Bildsegmentierung bzw. eine Zuordnung von Bildpunkten zur Pflanze oder Pflanzenteilen verbessert werden kann.

Vorzugsweise sind der mindestens eine Referenzbildpunkt und der Referenzkörper so angeordnet, dass der Referenzbildpunkt innerhalb des von dem Referenzkörper in dem Bild eingenommenen Bildbereichs liegt. Für die spektrale Belichtungskorrektur kann unter Verwendung der zu Referenzbildpunkten gehörigen Bilddaten und unter Verwendung der bekannten optischen Eigenschaften des Referenzkörpers eine spektrale Leistungsdichte der auf den Referenzkörper einfallenden elektromagnetischen Strahlung ermittelt werden. Da diese spektrale Leistungsdichte etwa der auf die Pflanzen bzw. Testpflanzen einfallenden spektralen Leistungsdichte entspricht, können die übrigen Bildpunkte der von der Kamera erfassten hyperspektralen Bilder unter Verwendung dieser spektralen Leistungsdichte normalisiert werden. Dabei können also die Bilddaten der Referenzbildpunkte als Referenzdaten verwendet werden.

Im Fall, dass der Auswertealgorithmus ein künstliches neuronales Netzwerk beinhaltet bzw. auf ein solches basiert, kann für die Durchführung der spektralen Belichtungskorrektur eine zusätzliche Schicht des Netzwerkes vorgesehen sein, etwa eine äußere Eingangsschicht oder eine innere, versteckte Schicht des Netzwerkes. Beispielsweise kann vorgesehen sein, dass in dieser Schicht die oben beschriebene Normalisierung der Bilddaten der Eingangsvektoren durchgeführt wird.

Ferner kann vorgesehen sein, dass die spektrale Belichtungskorrektur in regelmäßigen, möglichst kurzen zeitlichen Abständen automatisch wiederholt wird. Es kann auch eine kontinuierliche spektrale Belichtungskorrektur vorgesehen sein, bei der für jedes der mit der Kamera erfassten Bilder eine spektrale Belichtungskorrektur durchgeführt wird. Eine Wiederholung der spektralen Belichtungskorrektur in möglichst kurzen zeitlichen Abständen hat den Vorteil, dass sich zeitlich verändernde Belichtungsbedingungen praktisch kontinuierlich berücksichtigt und zeitgleich ausgleichen werden können. Insbesondere im Fall, dass die Kamera während des Trainingsverfahrens oder während der Anwendungsphase bewegt wird und sich die Belichtungsbedingungen somit fortlaufend ändern können, kann auf diese Weise häufig die Genauigkeit des Trainingsverfahrens und des Auswertealgorithmus verbessert werden.

Außerdem kann für eine weitere Verbesserung des Trainingsverfahrens vorgesehen sein, dass solche Bildpunkte des hyperspektralen Bildes der Testpflanze, die nicht zu der Testpflanze gehören, sondern beispielsweise zu einem Hintergrund der Testpflanze oder einem Boden, als solche erkannt werden, beispielsweise mittels einer Bildsegmentierung, und vorzugsweise anschließend bei der Erzeugung der Eingangsvektoren der Trainingsfälle unberücksichtigt bleiben. Somit werden also nur solche Bilddaten für die Eingangsvektoren der Trainingsfälle verwendet, die tatsächlich zur Testpflanze gehören. Eine solche Zuordnung der Bildpunkte zu Pflanzen beziehungsweise bestimmten Pflanzenteilen kann beispielsweise mittels einer Bildsegmentierung erzielt werden.

Vorzugsweise werden von der Testpflanze wiederum nur solche Bildpunkte zur Erzeugung der Trainingsfälle verwendet, die zu vorbestimmten und mittels einer entsprechend programmtechnisch eingerichteten Bildverarbeitungseinheit erkannten Pflanzenteilen der Testpflanze, wie etwa Blättern, gehören, wie weiter oben bereits beschrieben wurde.

Das erfindungsgemäße hyperspektrale Messgerät zur Bestimmung von Stoffkonzentrationen in mindestens einer Pflanze umfasst eine Kamera, die dazu eingerichtet ist, ein hyperspektrales Bild der mindestens einen Pflanze zu erfassen und in hyperspektrale Bilddaten umzuwandeln. Außerdem beinhaltet das Messgerät eine Auswerteeinheit, die dazu eingerichtet ist, aus den Bilddaten des hyperspektralen Bildes die Stoffkonzentrationen in der mindestens einen Pflanze mittels eines adaptiven Auswertealgorithmus zu berechnen, wobei der Auswertealgorithmus mittels eines Trainingsverfahrens hier vorgeschlagener Art kalibriert worden ist.

Die oben beschriebenen Vorteile des Trainingsverfahrens übertragen sich auch auf das erfindungsgemäße Messgerät. Durch die erfindungsgemäße Verwendung der beschriebenen Testpflanzen für die Kalibrierung des Messgeräts, welche zur Erzeugung der Trainingsfälle in vorbestimmte physiologische Zustände geführt worden sind, zeichnet sich das Messgerät durch eine besonders hohe Genauigkeit und Zuverlässigkeit bei der Bestimmung von Stoffkonzentrationen in Pflanzen aus. Es eignet sich dadurch besonders gut für landwirtschaftliche Anwendungen, in denen eine genaue und sichere Bestimmung der Stoffkonzentrationen in angebauten Nutzpflanzen gefordert ist.

Bei den genannten Stoffkonzentrationen kann es sich um Stoffkonzentrationen von Nährstoffen (Substrate) handeln. Dabei können dank der Kalibrierung mit dem hier vorgeschlagenen Trainingsverfahren mit dem Messgerät auch Stoffkonzentrationen solcher Nährstoffe bestimmt werden, deren direkter Einfluss auf die von der Pflanze ausgehende, also beispielsweise reflektierte oder gestreute, elektromagnetische Strahlung unterhalb einer Empfindlichkeit der Kamera des Messgerätes liegen.

Ein weiterer Vorteil des erfindungsgemäßen Messgeräts ist, dass es nicht auf nur einzelne Frequenzbänder oder wenige Stoffkonzentrationen beschränkt ist, wie es im Stand der Technik vorgesehen ist, sondern aufgrund des erfindungsgemäßen Trainingsverfahrens einen gesamten Frequenzbereich eines hyperspektralen Bildes ausnutzen kann. Es ist also auch für adaptive Auswertealgorithmen mit beliebig hochdimensionalen Eingangsvektoren und Ausgangsvektoren geeignet. Somit kann ein technischer Fortschritt in der spektralen Auflösung hyperspektraler Kameras durch das erfindungsgemäße Messgerät direkt in eine größerer Genauigkeit und Sicherheit in der Bestimmung der Stoffkonzentrationen in Pflanzen umgesetzt werden (nach Durchführung eines entsprechenden Trainingsverfahrens zur Kalibrierung des Auswertealgorithmus).

In einer Weiterentwicklung des Messgeräts ist vorgesehen, dass die Auswerteeinheit eine Bildverarbeitungseinheit umfasst, die dazu eingerichtet ist, die Bilddaten des hyperspektralen Bildes der mindestens einen Pflanze Zielstrukturen, insbesondere Strukturen von Blättern oder Früchten der mindestens einen Pflanze, zuzuordnen. Dies erlaubt eine besonders einfache, genaue und sichere Identifizierung von Bildpunkten, welche zur Erzeugung von Trainingsfällen geeignet sind, also insbesondere Bildpunkte, die zu Pflanzenteilen wie Blätter oder Früchte gehören.

Die Auswerteeinheit und/oder die Bildverarbeitungseinheit des Messgerätes kann dazu eingerichtet sein, bei der Ausführung des Auswertealgorithmus zur Bestimmung der Stoffkonzentrationen in einer Pflanze, solche Bildpunkte des hyperspektralen Bildes der Pflanze, die nicht zu dieser Pflanze gehören, sondern beispielsweise zu einem Hintergrund der Pflanze oder zu einem Boden, als nicht zu dieser Pflanze gehörig zu erkennen, beispielsweise mittels einer Bildsegmentierung. Es kann vorgesehen sein, diese Bildpunkte bei der anschließenden Bestimmung der Stoffkonzentrationen nicht zu berücksichtigen. Somit werden durch dieses Messgerät automatisch nur solche Bilddaten für die Bestimmung der Stoffkonzentrationen verwendet, die tatsächlich zur betreffenden Pflanze gehören. Vorzugsweise werden außerdem nur solche Bildpunkte zur Bestimmung der Stoffkonzentrationen verwendet, die zu vorbestimmten und mittels einer entsprechend programmtechnisch eingerichteten Bildverarbeitungseinheit des Messgerätes erkannten Pflanzenteilen der Testpflanze, wie etwa Blättern, gehören.

In einer Ausführungsform des Messgeräts ist die Auswerteeinheit eingerichtet, aus den berechneten Stoffkonzentrationen in der mindestens einen Pflanze eine Zusammensetzung und/oder eine Menge eines Betriebsmittels, insbesondere eines Düngemittels, eines Pflanzenschutzmittels oder von Wasser für die mindestens eine Pflanze zu bestimmen. Auf diese Weise lässt sich eine genaue und sichere sowie automatisierte Bestimmung dieser Betriebsmittel gewährleisten. Es lässt sich so insbesondere eine räumlich variable, auf den physiologischen Zustand einzelner Pflanzen (Ernährungszustand, Wassergehalt, Gesundheitszustand, eventueller Schädlingsbefall oder Pilzbefall der Pflanze) abgestimmte und/oder automatisierte Ausbringung von Betriebsmitteln realisieren.

Insbesondere erlaubt ein derartiges Messgerät aufgrund seiner hohen Genauigkeit und Zuverlässigkeit Pflanzen, deren Zustand von einem Sollzustand abweicht (zu geringer Wassergehalt oder Nährstoffgehalt), sehr schnell und frühzeitig zu erkennen und entsprechende Gegenmaßnahmen einzuleiten. Desweiteren ist es durch die genaue und zuverlässige Bestimmung von einer notwendigen Menge an Wasser, Düngemittel und/oder Pflanzenschutzmittel möglich, diese Betriebsmittel besonders sparsam einzusetzen.

In einer Weiterentwicklung umfasst das Messgeräts einen Signalgeber für ein Erzeugen eines Steuersignals für ein Ansteuern einer steuerbaren Vorrichtung zum Ausbringen eines Betriebsmittels, insbesondere eines Düngemittels, eines Pflanzenschutzmittels oder von Wasser, wobei in dem Steuersignal die Menge und/oder die Zusammensetzung des Betriebsmittels für die mindestens eine Pflanze kodiert ist. Dies erlaubt eine weitergehende Automatisierung der Ausbringung der Betriebsmittel mit den oben genannten Vorteilen.

Dementsprechend ist bei der erfindungsgemäßen Vorrichtung zum Ausbringen eines Betriebsmittels, insbesondere eines Düngemittels, eines Pflanzenschutzmittels oder von Wasser, vorgesehen, dass die Vorrichtung ein Messgerät hier vorgeschlagener Art umfasst sowie eine Steuereinheit zum Empfangen und Verarbeiten des Steuersignals des Messgeräts. Dies erlaubt schließlich eine noch weitergehende Automatisierung der Ausbringung der Betriebsmittel mit den oben genannten Vorteilen. Eine solche Vorrichtung kann insbesondere ein stationäres Leitungssystem umfassen mit einem Ventilsystem, welches durch die Steuereinheit ansteuerbar ist, beispielsweise ein Bewässerungssystem. Es ist aber auch möglich, dass diese Vorrichtung ein Fahrzeug umfasst, wie etwa einen Traktor mit einem Behälter für Düngemittel, oder ein Flugzeug, welches sich insbesondere zum Ausbringen von Pflanzenschutzmitteln über besonders weiträumige Gebiete eignet.

Im Folgenden wird die Erfindung anhand von speziellen Ausführungsbeispielen näher erläutert. Dabei zeigt:
- Figur 1:: ein hyperspektrales Bild eines Feldes mit Testpflanzen für eine Ausführungsform des erfindungsgemäßen Trainingsverfahrens,
- Figur 2:: einen Ausschnitt des in Figur 1 gezeigten Bildes mit einem markierten Blatt einer der Testpflanze sowie daraus abgeleitete Eingangsvektoren von Trainingsfällen,
- Figur 3:: ein Flussdiagramm einer Ausführungsform des erfindungsgemäßen Trainingsverfahrens,
- Figur 4:: ein Bewässerungssystem mit einem hyperspektralen Messgerät hier vorgeschlagener Art,
- Figur 5:: ein Traktor mit einem Behälter für Düngemittel und einem hyperspektralen Messgerät hier vorgeschlagener Art und
- Figur 6:: ein Flugzeug mit einem Behälter für Pflanzenschutzmittel und einem hyperspektralen Messgerät hier vorgeschlagener Art.

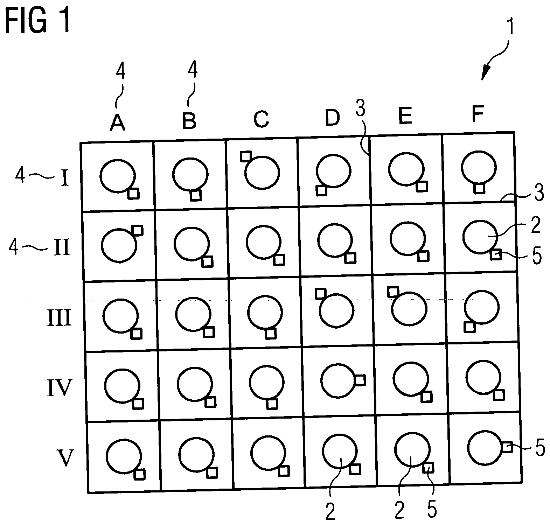

In Figur 1 ist ein hyperspektrales Bild 1 eines Feldes schematisch dargestellt, in dem Testpflanzen 2 einer einzelnen Pflanzenart für eine spezielle Ausführungsform des erfindungsgemäßen Trainingsverfahrens angebaut sind. Die Testpflanzen 2 sind in ein zweidimensionales Koordinatensystem 3 eingetragen, so dass jede der Testpflanzen 2 durch ihr zugeordnete Koordinate 4 eindeutig identifizierbar ist. Dadurch ist auch die Zuordnung der in dem Bild 1 erkennbaren Testpflanzen 2 vereinfacht. In dem gezeigten Beispiel werden die Testpflanzen 2 in vorbestimmte physiologische Zustände versetzt, indem die Testpflanzen 2 in dem Feld mit unterschiedlichen Mengen Wasser bewässert und mit unterschiedlichen Mengen eines Düngemittels versorgt werden. So ist in dem gezeigten Fall vorgesehen, dass die Testpflanzen in dem Feld von links nach rechts, als ausgehend von Koordinate A in Richtung nach Koordinate F, mit immer größeren Mengen Wasser bewässert werden. Die Testpflanzen 2 mit der Koordinate A sind also stark dehydriert, wohingegen die Testpflanzen 2 mit der Koordinate F übermäßig stark bewässert sind. Entsprechend erhalten die Testpflanzen 2 in dem Feld von oben nach unten, also ausgehend von Koordinate I in Richtung nach Koordinate V, immer größere Mengen des Düngemittels. So erhalten die Testpflanzen mit Koordinate I kein Düngemittel, während die Testpflanzen mit Koordinate V stark überdüngt werden. Es sind außerdem viele weitere Ausführungsformen denkbar. So ist es auch möglich entlang einer Koordinate die Zusammensetzung des Düngemittels zu ändern und beispielsweise den Gehalt eines oder mehrerer der oben genannten Nährstoffe in dem Düngemittel, wie etwa den Stickstoffgehalt im Düngemittel, entlang einer Koordinatenachse zu vergrößern.

Jeder der Testpflanzen 2 wird unmittelbar nachdem das hyperspektrale Bild des Feldes mit einer hyperspektralen Kamera erfasst wird (in diesem Beispiel innerhalb weniger Minuten, vorzugsweise innerhalb weniger als 10 Minuten), ein Pflanzenteil, in diesem Fall ein Blatt, entnommen und tiefgefroren, um die chemische Zusammensetzung das Blattes und die Stoffkonzentrationen in dem Blatt bis zur anschließenden chemischen Analyse möglichst konstant zu halten.

In der anschließenden chemischen Analyse werden die Konzentrationen einer Vielzahl chemischer Inhaltsstoffe des Blattes bestimmt, welche für eine Klassifizierung des physiologischen Zustands der Pflanze relevant sind. Insbesondere werden die Konzentrationen folgender dreizehn Nährstoffe (chemischer Elemente) gemessen: Stickstoff (N), Phosphor (P), Kalium (K), Magnesium (Mg), Kalzium (Ca), Schwefel (S), Kupfer (Cu), Bor (B), Eisen (Fe), Selen (Se), Natrium (Na), Zink (Zn) und Molybdän (Mo). Es wäre auch möglich, weitere Stoffe oder andere Stoffe, wie etwa komplexere Substanzen, zu wählen.

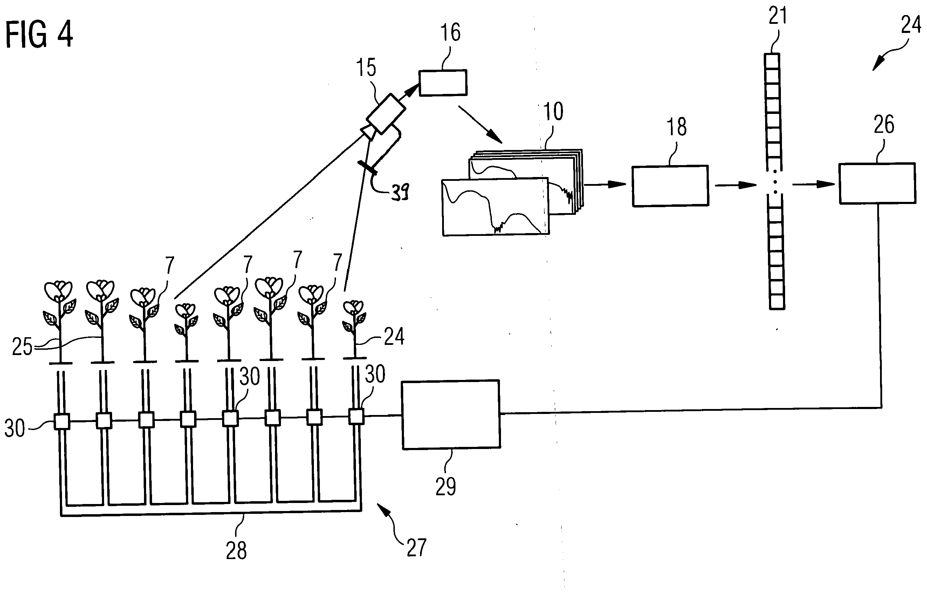

Aus den dreizehn Stoffkonzentrationen, die für jede der Testpflanzen 2 in einem Blatt der jeweiligen Testpflanze 2 gemessen werden, wird innerhalb einer Auswerteeinheit eines hyperspektralen Messgeräts hier vorgeschlagener Art, siehe Figuren 4, 5 und 6, ein 13-dimensionaler Ausgangsvektor gebildet. In dem hier gezeigten Beispiel mit dreißig Testpflanzen 2 werden also dreißig derartiger Ausgangsvektoren gebildet. Es ist aber natürlich auch möglich, eine höhere oder niedrigere Anzahl von Testpflanzen 2 vorzusehen und/oder eine größere Anzahl von Pflanzenteilen jeder dieser Testpflanze 2 zu entnehmen. Es ist auch möglich als Pflanzenteile Früchte oder Blütenblätter zu verwenden.

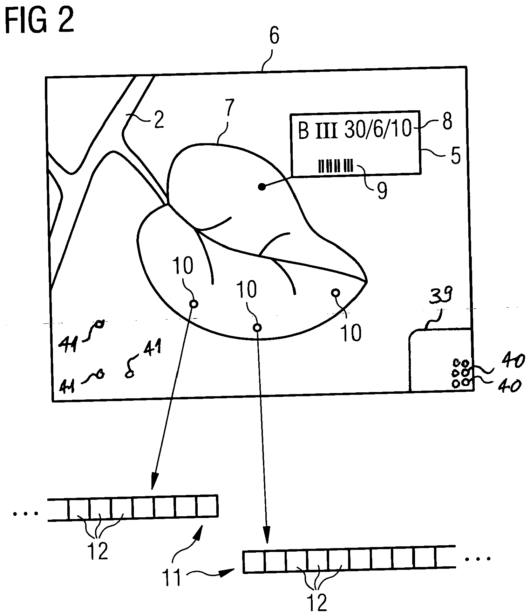

In diesem Beispiel ist an jedem der zu entnehmenden Pflanzenteile der Testpflanzen 2 eine Markierung 5 (ein "Tag") gut sichtbar angebracht, so dass diese Markierung 5 auch auf dem hyperspektralen Bild 1 erkennbar ist. Jede der Markierungen 5 enthält eine maschinenlesbare sowie eine menschenlesbare Beschriftung (siehe Figur 2) mit den Koordinaten der Pflanze sowie dem Zeitpunkt, an dem das hyperspektrale Bild der Testpflanzen erfasst wird.

Das hier beschriebene Ausführungsbeispiel des Trainingsverfahrens sieht vor, dass die Testpflanzen 2 wiederholt an verschiedenen Tagen hyperspektral erfasst werden, Pflanzenteile den Testpflanzen 2 entnommen und zur Bestimmung der Stoffkonzentrationen chemisch analysiert werden, um eine Kalibration des Auswertealgorithmus für verschiedene Wachstumsstadien der Testpflanzen 2 zu erzielen. Auf diese Weise lässt sich die Genauigkeit und Sicherheit des Auswertealgorithmus bei der Bestimmung der Stoffkonzentrationen während eines gesamten Pflanzzyklus einer Nutzpflanze (vom Stadium der Jungpflanze bis zum Stadium der Ernte) optimieren.

In Figur 2 ist ein Ausschnitt 6 des in Figur 1 gezeigten hyperspektralen Bildes 1 schematisch dargestellt. In dem Ausschnitt 6 ist ein zu entnehmendes Blatt 7 einer der Testpflanzen gezeigt, welches eine Markierung trägt. Die Markierung 5 trägt, wie oben beschrieben, eine menschenlesbare Beschriftung 8 sowie einen maschinenlesbaren Kode 9 zur Identifizierung der Testpflanze und des Zeitpunktes der Aufnahme. Die Auswerteeinheit des zu trainierenden Messgerätes, vgl. Figuren 4, 5 und 6, ist eingerichtet zur Durchführung einer Mustererkennung in hyperspektralen Bilddaten zur Erkennung von Bildpunkten 10 innerhalb von Pflanzenblättern mittels einer Bildsegmentierung. Die Auswerteeinheit ist ferner dazu eingerichtet, die Markierung 5 an dem Blatt 7 zu erkennen und den maschinenlesbaren Code 9 auf der Markierung 5 zu dekodieren. In dem hier beschriebenen Beispiel des Trainingsverfahrens ist vorgesehen, dass die den Testpflanzen 2 zu entnehmenden und chemisch zu untersuchenden Blätter 7 automatisch mittels der Auswerteeinheit des Messgeräts erkannt werden und die zugehörigen Kodes 9 auf den Markierungen 5 dieser Blätter 7 eingelesen werden. Anschließend wird für jedes einzelne dieser Blätter 7 aus jedem der Bildpunkte 10, die diesem einzelnen Blatt 7 zugeordnet sind, ein Eingangsvektor 11 für jeweils einen Trainingsfall gebildet. Auf diese Weise lassen sich pro Blatt eine Vielzahl von Eingangsvektoren 11 für Trainingsfälle bilden (hier sind zwei Eingangsvektoren 11 exemplarisch abgebildet). Die Anzahl dieser Eingangsvektoren 11 pro Blatt hängt von der Größe des Blattes 7 sowie von der Auflösung des hyperspektralen Bildes ab. In dem hier dargestellten Fall sind in dem gezeigten Blatt 7 eine Million Bildpunkte 10 enthalten, so dass eine Million Eingangsvektoren 11 für eine Million unterschiedlicher Trainingsfälle aus diesem Blatt 7 erzeugt werden.

Auf diese Weise wird gleichzeitig sichergestellt, dass bei der Erzeugung der Eingangsvektoren 11 für die Trainingsfälle nur die Bilddaten solche Bildpunkte 10 in die Eingangsvektoren eingehen, die zur Testpflanze 2 gehören und Bildpunkte 41, die nicht zur Testpflanze gehören, für die Erzeugung der Eingangsvektoren 11 unberücksichtigt bleiben.

Die Komponenten 12 eines jeden solchen Eingangsvektors 11 enthalten jeweils einen Intensitätswert eines der Spektralbänder des hyperspektralen Bildes in dem gegebenen Bildpunkt 10. In dem vorliegenden Beispiel wird ein Spektralbereich für Wellenlängen von 1000 nm bis 2400 nm kontinuierlich und lückenlos abgedeckt, wobei eine Breite eines jeden Spektralbandes (spektrale Bandbreite) 10 nm beträgt (halbe Scheitelwertbreite) .

Natürlich ist es auch möglich, einen kleineren oder einen größeren Spektralbereich zu verwenden sowie Spektralbänder mit einer größeren oder kleineren Breite. Eine besonders hohe Genauigkeit und Sicherheit des Auswertealgorithmus lässt sich mit einem möglichst breiten Spektralbereich erzielen, der mit möglichst schmalen Spektralbändern abgedeckt ist. Das hier vorgeschlagene Trainingsverfahren ist, wie bereits oben ausgeführt, nicht auf bestimmte Werte der Breite des Spektralbereichs oder der Spektralbänder beschränkt.

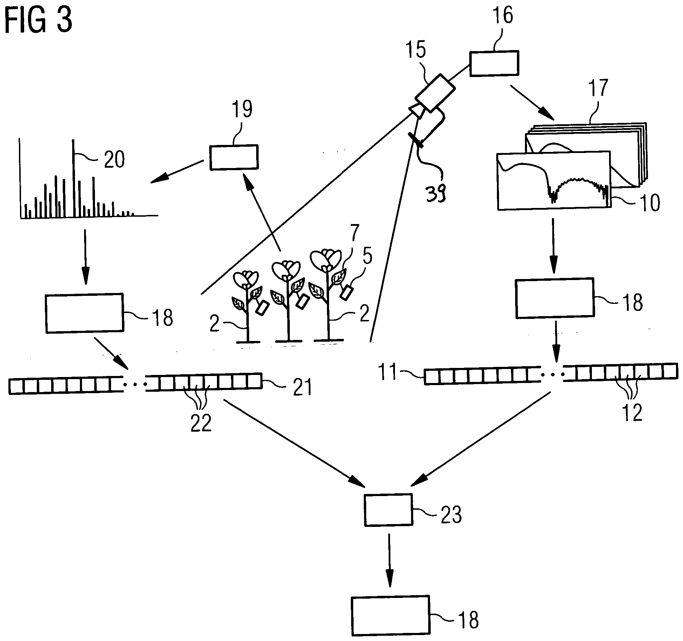

In einem nachfolgenden Schritt, vergleiche Figur 3, werden die so für das gezeigte Blatt 7 erzeugten Eingangsvektoren 11 mit Ausgangsvektoren, welche die in diesem Blatt gemessenen Stoffkonzentrationen enthalten, zu Trainingsfällen kombiniert. Analog wird auch mit den markierten Blättern 7 der weiteren Testpflanzen 2 verfahren. In einem letzten Schritt wird der Auswertealgorithmus in der Auswerteeinheit anhand der Trainingsfälle, die anhand der Blätter der in dem Feld angebauten Testpflanzen erzeugt wurden, mittels einer Fehlerrückführung kalibriert.

In Figur 3 sind die einzelnen Schritte des anhand Figuren 1 und 2 beschriebenen Ausführungsbeispiels des hier vorgeschlagenen Trainingsverfahrens noch einmal zusammenfassend und schematisch dargestellt. In einem ersten Schritt werden die Testpflanzen 2 einer Pflanzenart mit einer Kamera 15 des Messgeräts erfasst und ein hyperspektrales Bild der Testpflanzen erzeugt. In einer Bildverarbeitungseinheit 16 werden die Pflanzenteile 7 (Blätter), welche für eine chemische Analyse bestimmt sind und mit entsprechenden Markierungen 5 versehen sind, erkannt. In den zugehörigen Bilddaten 17 sind die zu einem jeden dieser Pflanzenteile zugeordneten hyperspektralen Bildpunkte 11 enthalten, welche selbst die Intensitätswerte aller Spektralbänder des Lichts beinhalten, das an den jeweiligen Bildpunkten durch den Pflanzenteil 7 reflektiert worden ist. Diese Intensitätswerte werden jeweils in der Auswerteeinheit 18 in einen Eingangsvektor 11 eines Trainingsfalls 23 umgewandelt.

Die für die chemische Analyse 19 bestimmten Pflanzenteile 7 werden auf Konzentrationen 20 verschiedener in der Pflanze enthaltener Stoffe hin untersucht. Die so gewonnenen Stoffkonzentrationen 20 werden für jeden Pflanzenteil 7 in einen Ausgangsvektor 21 eingefügt, so dass pro Komponente 22 des Ausgangsvektors ein Wert einer Stoffkonzentration eingetragen wird.

Schließlich wird für einen jeden Pflanzenteil 7 der zu diesem Pflanzenteil 7 gehörige Ausgangsvektor 21 mit allen zu diesem Pflanzenteil 7 gehörigen Eingangsvektoren 11 zu einer Vielzahl von Trainingsfällen 23 kombiniert (pro erkanntem Bildpunkt eines Pflanzenteils 7 ein Trainingsfall 23).

In einem letzten Schritt wird der adaptive Auswertealgorithmus, welcher in der Auswerteeinheit 18 in Form eines Mehrschichtperzeptrons implementiert ist, mittels eines Fehlerrückführungsverfahrens (Backpropagation) kalibriert. Das Ergebnis ist eine anhand dieser Trainingsfälle durchgeführte Optimierung von Gewichten (Parametern) des Perzeptrons, welches nun für eine Arbeitsphase einsatzbereit ist, also zur Bestimmung der Stoffkonzentrationen in Pflanzen der gegebenen Pflanzenart anhand hyperspektraler Bilddaten der Pflanzen, vgl. Figuren 4, 5 und 6.

Die Stoffkonzentrationen mancher der oben genannten Nährstoffe in den Pflanzen bzw. in den Testpflanzen sind so gering, dass die direkten Einflüsse dieser Nährstoffs auf die von der Pflanze oder der Testpflanze ausgehende Strahlung unterhalb einer Empfindlichkeit der Kamera 15 des Messgerätes 24 liegt. Durch die hier vorgeschlagene Kalibration des Auswertealgorithmus ist es dennoch möglich, die niedrigen Stoffkonzentrationen dieser Nährstoffe mit zu bestimmen.

Es ist außerdem vorgesehen, dass während des Trainingsverfahrens des Auswertealgorithmus eine Belichtungskorrektur der hyperspektralen Bilder 1 durchgeführt wird, bei der momentan vorliegende Belichtungsbedingungen der Testpflanzen 2 berücksichtigt und durch eine Normalisierung der hyperspektralen Bildpunkte 10 der von der Kamera 15 des Messgerätes 24 erfassten Bilder praktisch zeitgleich ausgeglichen werden. Für die Belichtungskorrektur ist innerhalb des durch die Kamera 15 erfassbaren Raumbereich (in den Figuren als von der Kamera 15 ausgehender Kegel dargestellt) permanent ein als spektraler Reflexionsstandard dienender, flächiger Referenzkörper 39 angeordnet, vgl. Figur 2, dessen Oberfläche vorgegebene optische Eigenschaften aufweist, wie beispielsweise einen bestimmten Farb- oder Grauton und/oder eine bestimmte Helligkeit.

Der Referenzkörper 39 ist starr mit der Kamera 15 verbunden, so dass er sich stets in einer festen Lage relativ zur Kamera 15 und in einer festen Position innerhalb des von der Kamera 15 erfassten Raumbereiches befindet. Für die Belichtungskorrektur werden jeweils mehrere fest vorgegebene Referenzbildpunkte 40 des von der Kamera 15 erfassten Bildes 1 verwendet, die in dem Bild 1 so angeordnet sind, dass der sie innerhalb eines von dem Referenzkörper in dem Bild 1 eingenommenen Bildbereichs liegen, vgl. in Figur 2 dargestellter Ausschnitt 6 des in Figur 1 gezeigten Bildes 1.

Für die Belichtungskorrektur wird unter Verwendung von den Referenzbildpunkten 40 gehörigen Bilddaten und den bekannten optischen Eigenschaften des Referenzkörpers 39 eine spektrale Leistungsdichte der auf den Referenzkörper 39 einfallenden elektromagnetischen Strahlung ermittelt. Anschließend werden die Bilddaten der Bildpunkte des Bildes 1 der dem Blatt 7 zugeordneten Bildpunkte 10 unter Verwendung dieser spektralen Leistungsdichte normalisiert.

Das Mehrschichtperzeptron des Auswertealgorithmus weist für die Durchführung der Belichtungskorrektur eine Eingangsschicht auf, in der die oben beschriebene Normalisierung der Bilddaten 12 der Eingangsvektoren 11 der Bildpunkte 10 durchgeführt wird. Genauso gut ist es aber auch möglich, diese Belichtungskorrektur in einer zusätzlichen, versteckten Schicht des Perzeptrons durchzuführen.

In Figuren 4, 5 und 6 ist jeweils eine Vorrichtung zum Austragen eines Betriebsmittels schematisch dargestellt, die jeweils eine Ausführungsform eines hyperspektralen Messgeräts 24 hier vorgeschlagener Art umfasst. Die Messgeräte 24 dieser Vorrichtungen umfassen jeweils eine hyperspektrale Kamera 15 zum Erfassen hyperspektraler Bilder von Pflanzen und zum Erzeugen von Bilddaten aus den erfassten Bildern sowie eine Auswerteeinheit 18 mit einer Bildverarbeitungseinheit 16 zum Erkennen von Blättern der Pflanzen 25 innerhalb diesen Bilddaten. Die Auswerteeinheit 18 ist ferner eingerichtet zum Ausführen eines adaptiven Auswertealgorithmus zur Bestimmung von Stoffkonzentrationen innerhalb der mit der Kamera 15 erfassten Pflanzen 25 aus den hyperspektralen Bilddaten der Pflanzen 25. Der Auswertealgorithmus jeder der in den Figuren 4, 5 und 6 gezeigten Messgeräte ist kalibriert mit dem anhand von Figuren 1 bis 3 beschriebenen Trainingsverfahren.

Somit sind diese Messgeräte 24 zur Bestimmung der Stoffkonzentrationen der oben genannten Nährstoffe in den Pflanzen 2 bzw. Pflanzenblättern 7 kalibriert, wobei die Stoffkonzentrationen zumindest einiger dieser Nährstoffe so gering sind, dass der direkte Einfluss dieser Stoffe auf die von den Pflanzen 2 reflektierte Strahlung unterhalb einer Empfindlichkeit der Kameras 15 dieser Messgeräte 24 liegt.

Die in Figur 4 gezeigte Auswerteeinheit 18 des Messgerätes 24 ist ferner dazu eingerichtet, aus den berechneten Stoffkonzentrationen in den einzelnen Pflanzen 25 einen Wasserbedarf jeder einzelnen dieser Pflanzen 25 zu berechnen und daraus eine für die Bewässerung der einzelnen Pflanzen notwendige Menge von Wasser zu berechnen. Das Messgerät 24 umfasst außerdem einen Signalgeber 26 zum Erzeugen eines Steuersignals, in dem die für die einzelnen Pflanzen bestimmte Menge von Wasser kodiert ist.

Die in Figur 4 gezeigte Vorrichtung ist als ein Bewässerungssystem 27 für Pflanzen ausgestaltet und umfasst ein Leitungssystem 28 zur Versorgung der einzelnen Pflanzen 25 mit Wasser. Dieses Bewässerungssystem 27 beinhaltet eine Steuereinheit 29 zum Ansteuern eines Ventilsystems 30 des Leitungssystems 28, mit dem eine Flussgeschwindigkeit des Wassers innerhalb des Leitungssystems 28 reguliert werden kann zur Einstellung einer an jede der einzelnen Pflanzen angepasste Wassermenge. Die Steuereinheit 29 ist mit dem Signalgeber 26 mittels einer Funkverbindung zum Empfangen des Steuersignals verbunden und eingerichtet, das Ventilsystem 30 entsprechend der in dem Steuersignal kodierten Wassermengen für die einzelnen Pflanzen anzusteuern.

Die Kamera 15 ist stationär an einer Stelle angebracht, die eine gleichzeitige Erfassung aller der von dem Bewässerungssystem 27 versorgbaren Pflanzen ermöglicht. Alternativ ist es bei Bedarf auch möglich, mehrere Kameras vorzusehen, etwa um eine große landwirtschaftlich bestellte Fläche mit einer hinreichenden örtlichen Auflösung erfassen zu können.

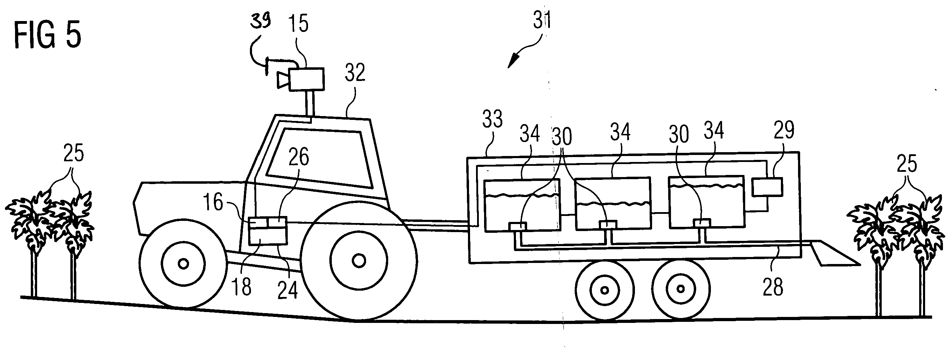

Die in Figur 5 gezeigte Auswerteeinheit 18 des Messgerätes ist dazu eingerichtet, aus den berechneten Stoffkonzentrationen in den einzelnen Pflanzen 25 einen Nährstoffbedarf dieser Pflanzen 25 zu berechnen und daraus eine auf die einzelnen Pflanzen 25 abgestimmte Menge und Zusammensetzung eines Düngemittels zu berechnen. Das Messgerät umfasst außerdem einen Signalgeber zum Erzeugen eines Steuersignals, in dem die für die einzelnen Pflanzen bestimmten Menge und Zusammensetzung des Düngemittels kodiert ist.

Die in Figur 5 gezeigte Vorrichtung 31 ist als ein Traktor 32 mit einem auf einem Fahrwerk angeordneten Behälter mit Kammern zur Aufnahme mehrerer verschiedener Düngemittel ausgestaltet. Dieser Behälter beinhaltet eine Steuereinheit 29 zum Ansteuern eines Ventilsystems 30 des Behälters 33, mit dem eine Austrittsgeschwindigkeit der einzelnen Düngemittel aus dem Behälter regulierbar ist zur Einstellung einer an die einzelnen Pflanzen angepassten Mengen dieser einzelnen Düngemittel. Somit ist eine Zusammensetzung einer Mischung aus verschiedenen Düngemitteln einstellbar, welche auf den Nährstoffbedarf jeder einzelnen der Pflanzen 25 angepasst ist. Die Steuereinheit 29 ist mit dem Signalgeber 26 mittels einer Funkverbindung zum Empfangen des Steuersignals verbunden und eingerichtet, das Ventilsystem 30 entsprechend der in dem Steuersignal kodierten Mengen der einzelnen Düngemittel für die einzelnen Pflanzen 25 anzusteuern, so dass bei einem Vorbeibewegen einer Auslassöffnung 35 des Behälters 33 an einer Pflanze 25 die für diese Pflanze 25 bestimmten Düngemittel in den für die Pflanze 25 berechneten Mengen auslassbar sind.

Die Kamera 15 des Messgeräts dieser Vorrichtung 31 ist auf einem Dach des Traktors 32 angeordnet, könnte aber genauso gut auch an einer anderen Stelle am Traktor 32 oder auch an dem Fahrwerk oder dem Behälter 33 befestigt sein. Es ist auch möglich, mehrere derartiger Kameras 15 vorzusehen für eine große räumliche Auflösung der von den Pflanzen 25 erfassten hyperspektralen Bilder.

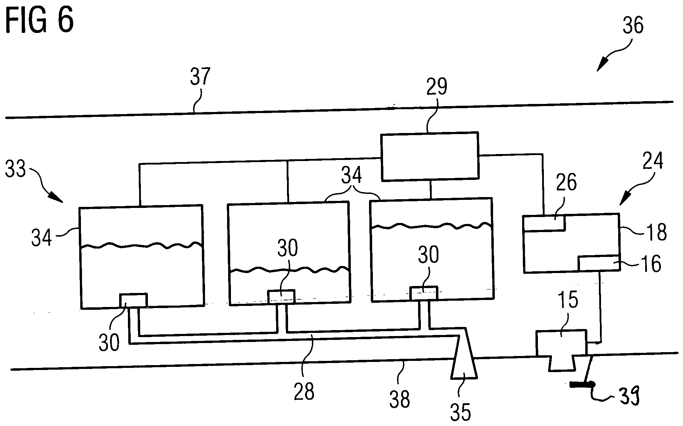

Die in Figur 6 gezeigte Auswerteeinheit 18 des Messgerätes 24 ist dazu eingerichtet, aus den berechneten Stoffkonzentrationen in einzelnen Pflanzen einen Schädlingsbefall oder einen Pilzbefall dieser Pflanzen zu erkennen und daraus eine auf die einzelnen Pflanzen abgestimmte Menge und Zusammensetzung eines Pflanzenschutzmittels zu berechnen. Das Messgerät 24 umfasst außerdem einen Signalgeber 26 zum Erzeugen eines Steuersignals, in dem die für die einzelnen Pflanzen bestimmten Menge und Zusammensetzung des Pflanzenschutzmittels kodiert ist.

Die in Figur 6 gezeigte Vorrichtung 36 umfasst ein Flugzeug 37 (nur ein Ausschnitt eines Rumpfes des Flugzeugs 37 ist gezeigt) mit dem in dem Flugzeug 37 angeordneten Messgerät 24 und einem im Flugzeug 37 angeordneten Behälter 33 mit Kammern 34 zur Aufnahme mehrerer verschiedener Pflanzenschutzmittel ausgestaltet. Dieser Behälter 33 beinhaltet eine Steuereinheit 29 zum Ansteuern eines Ventilsystems 30 des Behälters 33, mit dem eine Austrittsgeschwindigkeit der einzelnen Pflanzenschutzmittel aus dem Behälter 33 regulierbar ist zur Einstellung einer an die mit dem überflogenen Pflanzen angepassten Mengen dieser einzelnen Pflanzenschutzmittel. Somit ist eine Zusammensetzung einer Mischung aus verschiedenen Pflanzenschutzmitteln einstellbar, welche auf einen Schädlingsbefall oder Pilzbefall der überflogenen Pflanzen angepasst ist, welcher anhand des Gesundheitsstatus der Pflanzen mit der Auswerteeinheit feststellbar ist. Die Steuereinheit 29 ist mit dem Signalgeber 26 zum Empfangen des Steuersignals verbunden und eingerichtet, das Ventilsystem 30 entsprechend der in dem Steuersignal kodierten Pflanzenschutzmittel für die überflogenen Pflanzen anzusteuern, so dass bei einem Überfliegen der Pflanzen aus einer Austrittsöffnung des Behälters ein Pflanzenschutzmittel in einer für die überflogenen Pflanzen eingestellten Zusammensetzung und Menge auslassbar ist.

Die Kamera 15 des Messgeräts 24 dieser Vorrichtung 36 ist an einer Unterseite 38 des Flugzeugs 37 angeordnet, könnte aber genauso gut auch an einer anderen Stelle am Flugzeug 37, insbesondere an Unterseiten von Tragflächen des Flugzeugs 37 befestigt sein. Es ist auch möglich, mehrere derartiger Kameras 15 vorzusehen für eine große räumliche Auflösung der von den Pflanzen erfassten hyperspektralen Bilder.

Anhand der in Figur 5 gezeigten Vorrichtung soll hier auch eine Arbeitsphase des dort gezeigten hyperspektralen Messgeräts 24 erläutert werden, welches analog auch auf die in Figuren 4 und 6 beschriebenen Messgeräte übertragbar ist.

In einem ersten Schritt wird mit der Kamera 15 ein hyperspektrales Bild der Pflanzen 25 aufgenommen und die erzeugten hyperspektralen Bilddaten an die Bildverarbeitungseinheit 16 weitergeleitet. Dort werden zu Blättern 7 der Pflanzen gehörigen hyperspektralen Bildpunkte 10 mittels einer Bildsegmentierung erkannt und die zugehörigen spektralen Intensitätswerte in der Auswerteeinheit 18 in Eingangsvektoren des Auswertealgorithmus eingesetzt.

Dieser Auswertealgorithmus ist, wie bereits oben beschrieben, in der Form eines Mehrschichtperzeptrons in der Auswerteeinheit 18 implementiert. In der Eingabeschicht dieses Perzeptrons wird eine Normalisierung der hyperspektralen Bilddaten durchgeführt. Wie auch schon während der Durchführung des oben beschriebenen Trainingsverfahrens ist auch bei dem bereits kalibrierten Messgerät 24 mit der Kamera 15 ein Referenzkörper 39 starr verbunden und ragt in einen von der Kamera erfassbaren Bildbereich hinein. Die Auswerteeinheit 16 ist programmtechnisch eingerichtet, für jedes der von der Kamera 15 erfassten Bilder 1 eine Belichtungskorrektur durchzuführen, bei dem, wie im oben beschriebenen Trainingsverfahren, Bilddaten von Referenzbildpunkten 40, die dem Referenzkörper 39 zugeordnet sind, zur Normalisierung der Bilddaten der übrigen Bildpunkte 10 verwendet werden, vgl. Figur 2.

Aus den Eingangsvektoren werden mittels des anhand von Testpflanzen kalibrierten Auswertealgorithmus für jede der Pflanzen Stoffkonzentrationen innerhalb der Pflanze 25 berechnet. Aus den Stoffkonzentrationen wird ein physiologischer Zustand der einzelnen Pflanzen 25 bestimmt und auf die einzelnen Pflanzen 25 abgestimmte Mengen Wasser (bzw. Düngemittel oder Pflanzenschutzmittel) berechnet und in einem Ausgangsvektor 21 ausgegeben. Schließlich wird dieser Ausgangsvektor an den Signalgeber 26 übergeben, der diesen Ausgangsvektor in ein Steuersignal umwandelt, in dem diese Wassermengen (bzw. Mengen an Düngemittel oder Pflanzenschutzmittel) kodiert sind. Das Ausgabesignal wird an die Steuereinheit 29 des Bewässerungssystems weitergeleitet und dort zum entsprechenden Ansteuern des Ventilsystems 30 weiterverarbeitet.

### Bezugszeichenliste:

1 Hyperspektrales Bild
2 Testpflanze
3 Koordinatensystem
4 Koordinate
5 Markierung
6 Bildausschnitt
7 Blatt
8 Beschriftung auf Markierung
9 Kode auf Markierung
10 Hyperspektraler Bildpunkt (Pixel)
11 Eingangsvektor
12 Komponente eines Eingangsvektors
13 Ausgangsvektor
14 Komponenten eines Ausgangsvektors
15 Kamera
16 Bildverarbeitungseinheit
17 Hyperspektrale Bilddaten
18 Auswerteeinheit
19 Chemische Analyse
20 Stoffkonzentrationen
21 Ausgangsvektor
22 Komponenten des Ausgangsvektors
23 Trainingsfall
24 Hyperspektrales Messgerät
25 Pflanzen
26 Signalgeber
27 Bewässerungssystem
28 Leitungssystem
29 Steuereinheit
30 Ventilsystem
31 Vorrichtung (zum Ausbringen von Düngemittel)
32 Traktor
33 Behälter
34 Kammer
35 Auslassöffnung
36 Vorrichtung (zum Ausbringen von Pflanzenschutzmittel)
37 Flugzeug
38 Unterseite des Flugzeugs
39 Referenzkörper
40 Referenzbildpunkt
41 nicht zur (Test-)Pflanze gehöriger Bildpunkt

## Patentansprüche

1. Trainingsverfahren für einen mit einem hyperspektralen Messgerät (24) durchführbaren adaptiven Auswertealgorithmus, insbesondere für ein künstliches neuronales Netzwerk, zur Bestimmung von Stoffkonzentrationen (20) in mindestens einer Pflanze (25) anhand von mit einer Kamera (15) des Messgerätes (24) erzeugten hyperspektralen Bilddaten (17) der mindestens einen Pflanze (25), wobei Parameter des adaptiven Auswertealgorithmus anhand einer Vielzahl von Trainingsfällen (23) kalibriert werden, wobei jeder dieser Trainingsfälle (23) gegeben ist durch einen Eingangsvektor (11), der Bilddaten (17) eines hyperspektralen Bildes (1) einer zu dem Trainingsfall (23) gehörigen Testpflanze (2) beinhaltet, und einen Ausgangsvektor (21), der durch mittels einer chemischen Analyse (19) bestimmte Stoffkonzentrationen (20) innerhalb dieser zu dem Trainingsfall (23) gehörigen Testpflanze (2) gegeben ist,
**dadurch gekennzeichnet,**
**dass** jeder einzelne der Trainingsfälle (23) erzeugt wird, indem zunächst die zu dem Trainingsfall (23) gehörige Testpflanze (2) in einen vorbestimmten physiologischen Zustand geführt wird und anschließend, während elektromagnetische Strahlung auf die Testpflanze (2) einfällt und reflektierte oder gestreute elektromagnetische Strahlung von der Testpflanze (2) ausgeht, mit der Kamera (15) des Messgerätes (24) ein hyperspektrales Bild (1) der Testpflanze (2) erzeugt wird, wobei eine chemische Analyse (19) zur Messung der Stoffkonzentrationen (20) in der Testpflanze (2) durchgeführt wird, wobei Bilddaten (17) des hyperspektralen Bildes (1) der Testpflanze (2) in den Eingangsvektor (11) des Trainingsfalls (23) übertragen werden und die Stoffkonzentrationen (20) der mindestens einen Testpflanze (2) in den Ausgangsvektor (21) des Trainingsfalls (23) übertragen werden, wobei es sich bei den Stoffkonzentrationen (20) um Stoffkonzentrationen (20) von Nährstoffen handelt, wobei die Nährstoffe mit der auf die Testpflanze (2) einfallenden elektromagnetischen Strahlung wechselwirken und durch diese Wechselwirkung die von der Testpflanze (2) ausgehende elektromagnetische Strahlung beeinflussen, wobei die Stoffkonzentration (20) zumindest eines dieser Nährstoffe zu gering ist, um eine Messung oder Detektion der Wechselwirkung dieses Nährstoffs mit der auf die Testpflanze (2) einfallenden elektromagnetischen Strahlung mittels der Kamera (15) zu ermöglichen.

2. Trainingsverfahren nach Anspruch 1, **dadurch gekennzeichnet, dass** es sich bei dem zumindest einem Nährstoff um ein chemisches Element aus der Gruppe Phosphor (P), Kalium (K), Magnesium (Mg), Kalzium (Ca), Schwefel (S), Kupfer (Cu), Bor (B), Eisen (Fe), Selen (Se), Natrium (Na), Zink (Zn), Molybdän (Mo) handelt.

3. Trainingsverfahren nach einem der vorangehenden Ansprüche, **dadurch gekennzeichnet, dass** Bilddaten (17) eines hyperspektralen Bildes (1) einer Testpflanze (2) mittels einer Bildverarbeitungseinheit (16) einem Pflanzenteil dieser Testpflanze (2), insbesondere einem Blatt (7) dieser Testpflanze (2), zugeordnet werden und aus diesen Bilddaten (17) eine Vielzahl von Eingangsvektoren (11) gebildet wird und aus in diesem Pflanzenteil gemessene Stoffkonzentrationen (20) ein Ausgangsvektor (21) gebildet wird, wobei anschließend jeder der Eingangsvektoren (11) mit dem Ausgangsvektor (21) zu jeweils einem Trainingsfall (23) kombiniert wird.

4. Trainingsverfahren nach einem der vorangehenden Ansprüche, **dadurch gekennzeichnet, dass** mindestens ein Bildpunkt innerhalb des hyperspektralen Bildes (1) der Testpflanze (2) als ein fest vorgegebener Referenzbildpunkt (40) für eine spektrale Belichtungskorrektur des Bildes (1) verwendet wird, wobei Bilddaten (17) von Bildpunkten (10) des Bildes (1), die von dem mindestens einen Referenzbildpunkt (40) verschiedenen sind, unter Verwendung von Bilddaten (17) des mindestens einen Referenzbildpunktes (40) normalisiert werden.

5. Trainingsverfahren nach Anspruch 4, **dadurch gekennzeichnet, dass** in einen von der Kamera (15) des Messgerätes (24) erfassten Raumbereich ein Referenzkörper (39) mit vorgegebenen optischen Eigenschaften so positioniert wird, dass der mindestens eine Referenzbildpunkt (40) innerhalb eines von dem Referenzkörper (39) eingenommenen Bildbereichs des hyperspektralen Bildes (1) der Testpflanze (2) liegt.

6. Trainingsverfahren nach einem der vorangehenden Ansprüche, **dadurch gekennzeichnet, dass** solche Bildpunkte (41) des hyperspektralen Bildes (1) der Testpflanze (2), die nicht zu der Testpflanze (2) gehören, erkannt werden.

7. Hyperspektrales Messgerät (24) zur Bestimmung von Stoffkonzentrationen (20) in mindestens einer Pflanze (25) mit einer Kamera (15), die dazu eingerichtet ist ein hyperspektrales Bild (1) der mindestens einen Pflanze (25) zu erfassen und in Bilddaten (17) umzuwandeln, wobei eine Auswerteeinheit (18) des Messgeräts (24) eingerichtet ist, aus den Bilddaten (17) des hyperspektralen Bildes (1) die Stoffkonzentrationen (20) in der mindestens einen Pflanze (25) mittels eines adaptiven Auswertealgorithmus zu berechnen, **dadurch gekennzeichnet, dass** der Auswertealgorithmus mittels eines Trainingsverfahrens nach einem der vorangehenden Ansprüche kalibriert worden ist.

8. Messgerät (24) nach Anspruch 7, **dadurch gekennzeichnet, dass** die Auswerteeinheit (18) eine Bildverarbeitungseinheit (16) umfasst, die dazu eingerichtet ist, die Bilddaten (17) des hyperspektralen Bildes (1) der mindestens einen Pflanze (25) Zielstrukturen, insbesondere Strukturen von Pflanzenteilen der mindestens einen Pflanze (25), zuzuordnen.

9. Messgerät (24) nach einem der Ansprüche 7 oder 8, **dadurch gekennzeichnet, dass** die Auswerteeinheit (18) oder eine Bildverarbeitungseinheit (16) des Messgerätes (24) programmtechnisch eingerichtet ist, solche Bildpunkte (41) des hyperspektralen Bildes (1), die nicht zu dieser Pflanze (25) gehören, als nicht zu dieser Pflanze (25) gehörig zu erkennen.

10. Messgerät (24) nach einem der Ansprüche 7 bis 9, **dadurch gekennzeichnet, dass** die Auswerteeinheit (18) des Messgeräts (24) programmtechnisch eingerichtet ist, unter Verwendung von Bilddaten (17) mindestens eines als Referenzbildpunkt (40) fest vorgegebenen Bildpunktes (10) des hyperspektralen Bildes (1) Bilddaten (17) von Bildpunkten (10) dieses Bildes (1), die von diesem mindestens einen Referenzbildpunkt (40) verschieden sind, für eine spektrale Belichtungskorrektur zu normalisieren.

11. Messgerät (24) nach Anspruch 10, **dadurch gekennzeichnet, dass** das Messgerät (24) einen Referenzkörper (39) mit vorgegebenen optischen Eigenschaften umfasst, der innerhalb eines mit der Kamera (15) erfassten Raumbereichs so positioniert ist, dass der mindestens eine Referenzbildpunkt (40) innerhalb eines von dem Referenzkörper (39) eingenommenen Bildbereichs des mit der Kamera (15) erfassten hyperspektralen Bildes (1) liegt.

12. Messgerät (24) nach einem der Ansprüche 10 oder 11, **dadurch gekennzeichnet, dass** der Auswertealgorithmus in der Form eines künstlichen neuronalen Netzwerkes implementiert ist, wobei die Auswerteeinheit (18) programmtechnisch eingerichtet ist, bei der Auswertung einer Eingangsschicht oder einer versteckten Schicht des Netzwerkes die Normalisierung der Bilddaten (17) für die spektrale Belichtungskorrektur durchzuführen.

13. Messgerät (24) nach einem der Ansprüche 7 bis 12, **dadurch gekennzeichnet, dass** die Auswerteeinheit (18) eingerichtet ist aus den berechneten Stoffkonzentrationen (20) in der mindestens einen Pflanze (25) eine Zusammensetzung und/oder eine Menge eines Betriebsmittels, insbesondere eines Düngemittels, eines Pflanzenschutzmittels oder von Wasser, für die mindestens eine Pflanze (25) zu bestimmen.

14. Messgerät (24) nach Anspruch 13, **dadurch gekennzeichnet, dass** das Messgerät (24) einen Signalgeber (26) umfasst für ein Erzeugen eines Steuersignals für ein Ansteuern einer steuerbaren Vorrichtung (31; 36) zum Ausbringen eines Betriebsmittels, insbesondere eines Düngemittels, eines Pflanzenschutzmittels oder von Wasser, wobei in dem Steuersignal die Menge und/oder die Zusammensetzung des Betriebsmittels für die mindestens eine Pflanze (25) kodiert ist.

15. Vorrichtung (31; 36) zum Ausbringen eines Betriebsmittels, insbesondere eines Düngemittels, eines Pflanzenschutzmittels oder von Wasser, **dadurch gekennzeichnet, dass** sie ein Messgerät (24) nach Anspruch 14 umfasst sowie eine Steuereinheit (29) zum Empfangen und Verarbeiten des Steuersignals des Messgeräts (24).

## Claims

1. Training method for an adaptive evaluation algorithm which can be carried out using a hyperspectral measuring device (24), in particular for an artificial neural network, for determining substance concentrations (20) in at least one plant (25) based on hyperspectral image data (17) of the at least one plant (25) which are generated by a camera (15) of the measuring device (24), wherein parameters of the adaptive evaluation algorithm are calibrated based on a plurality of training cases (23), wherein each of said training cases (23) is given by an input vector (11), which contains image data (17) of a hyperspectral image (1) of a test plant (2) belonging to the training case (23), and an output vector (21), which is given by substance concentrations (20) within said test plant (2) belonging to the training case (23), said substance concentrations being determined by means of a chemical analysis (19),
**characterized**
**in that** each one of the training cases (23) is generated by first bringing the test plant (2) belonging to the training case (23) into a predetermined physiological state and then generating a hyperspectral image (1) of the test plant (2) by means of the camera (15) of the measuring device (24) while electromagnetic radiation impinges on the test plant (2) and reflected or scattered electromagnetic radiation comes from the test plant (2), wherein a chemical analysis (19) is carried out in order to measure the substance concentrations (20) in the test plant (2), wherein image data (17) of the hyperspectral image (1) of the test plant (2) are transmitted in the input vector (11) of the training case (23) and the substance concentrations (20) of the at least one test plant (2) are transmitted in the output vector (21) of the training case (23), wherein the substance concentrations (20) are substance concentrations (20) of nutrients, wherein the nutrients interact with the electromagnetic radiation impinging on the test plant (2) and, as a result of this interaction, influence the electromagnetic radiation coming from the test plant (2), wherein the substance concentration (20) of at least one of said nutrients is too low to enable any measurement or detection of the interaction of said nutrient with the electromagnetic radiation impinging on the test plant (2) by means of the camera (15).

2. Training method according to claim 1, **characterized in that** the at least one nutrient is a chemical element from the group consisting of phosphorus (P), potassium (K), magnesium (Mg), calcium (Ca), sulphur (S), copper (Cu), boron (B), iron (Fe), selenium (Se), sodium (Na), zinc (Zn), and molybdenum (Mo).

3. Training method according to one of the preceding claims, **characterized in that** image data (17) of a hyperspectral image (1) of a test plant (2) are assigned by means of an image processing unit (16) to a plant part of said test plant (2), in particular to a leaf (7) of said test plant (2), and a plurality of input vectors (11) are formed from said image data (17) and one output vector (21) is formed from substance concentrations (20) measured in said plant part, wherein each of the input vectors (11) is then combined with the output vector (21) to form in each case one training case (23).

4. Training method according to one of the preceding claims, **characterized in that** at least one pixel within the hyperspectral image (1) of the test plant (2) is used as a fixedly predefined reference pixel (40) for a spectral exposure correction of the image (1), wherein image data (17) of pixels (10) of the image (1) which are different from the at least one reference pixel (40) are normalized using image data (17) of the at least one reference pixel (40).

5. Training method according to claim 4, **characterized in that** a reference body (39) having predefined optical properties is positioned in a spatial area captured by the camera (15) of the measuring device (24) such that the at least one reference pixel (40) is situated within an image area of the hyperspectral image (1) of the test plant (2) that is occupied by the reference body (39).

6. Training method according to one of the preceding claims, **characterized in that** those pixels (41) of the hyperspectral image (1) of the test plant (2) that do not belong to the test plant (2) are recognized.

7. Hyperspectral measuring device (24) for determining substance concentrations (20) in at least one plant (25) by means of a camera (15) which is configured to capture a hyperspectral image (1) of the at least one plant (25) and to convert it into image data (17), wherein an evaluation unit (18) of the measuring device (24) is configured to calculate from the image data (17) of the hyperspectral image (1) the substance concentrations (20) in the at least one plant (25) by means of an adaptive evaluation algorithm, **characterized in that** the evaluation algorithm has been calibrated by means of a training method according to one of the preceding claims.

8. Measuring device (24) according to claim 7, **characterized in that** the evaluation unit (18) comprises an image processing unit (16) which is configured to assign the image data (17) of the hyperspectral image (1) of the at least one plant (25) to target structures, in particular to structures of plant parts of the at least one plant (25).

9. Measuring device (24) according to one of claims 7 or 8, **characterized in that** the evaluation unit (18) or an image processing unit (16) of the measuring device (24) is configured in programming terms to recognize those pixels (41) of the hyperspectral image (1) that do not belong to said plant (25) as not belonging to said plant (25).

10. Measuring device (24) according to one of claims 7 to 9, **characterized in that** the evaluation unit (18) of the measuring device (24) is configured in programming terms to normalize, using image data (17) of at least one pixel (10) of the hyperspectral image (1) that is fixedly predefined as a reference pixel (40), image data (17) of pixels (10) of said image (1) which are different from said at least one reference pixel (40), for the purpose of spectral exposure correction.

11. Measuring device (24) according to claim 10, **characterized in that** the measuring device (24) comprises a reference body (39) having predefined optical properties, which is positioned within a spatial area captured by the camera (15) such that the at least one reference pixel (40) is situated within an image area of the hyperspectral image (1) captured by the camera (15) that is occupied by the reference body (39).

12. Measuring device (24) according to one of claims 10 or 11, **characterized in that** the evaluation algorithm is implemented in the form of an artificial neural network, wherein the evaluation unit (18) is configured in programming terms to carry out the normalization of the image data (17) for the spectral exposure correction during the evaluation of an input layer or of a hidden layer of the network.

13. Measuring device (24) according to one of claims 7 to 12, **characterized in that** the evaluation unit (18) is configured to determine, from the calculated substance concentrations (20) in the at least one plant (25), a composition and/or a quantity of a resource, in particular of a fertilizer, plant protection agent or water, for the at least one plant (25).

14. Measuring device (24) according to claim 13, **characterized in that** the measuring device (24) comprises a signal generator (26) for generating a control signal for actuating a controllable device (31; 36) to dispense a resource, in particular a fertilizer, plant protection agent or water, wherein the quantity and/or the composition of the resource for the at least one plant (25) is encoded in the control signal.

15. Device (31; 36) for dispensing a resource, in particular a fertilizer, plant protection agent or water, **characterized in that** it comprises a measuring device (24) according to claim 14 and also a control unit (29) for receiving and processing the control signal of the measuring device (24).

## Revendications

1. Procédé d'apprentissage pour un algorithme d'analyse adaptatif exécutable avec un appareil de mesure hyper-spectral (24), en particulier pour un réseau neuronal artificiel, pour la détermination de concentrations de matières (20) dans au moins une plante (25) à l'aide de données d'images hyper-spectrales (17) de l'au moins une plante (25), générées avec une caméra (15) de l'appareil de mesure (24), des paramètres de l'algorithme d'analyse adaptatif étant calibrés à l'aide d'une pluralité de cas d'apprentissage (23), chacun de ces cas d'apprentissage (23) étant donné par un vecteur d'entrée (11) qui contient les données d'images (17) d'une image hyper-spectrale (1) d'une plante de test (2) appartenant au cas d'apprentissage (23) et par un vecteur de sortie (21) qui est donné par une concentration de matière (20), déterminée au moyen d'une analyse chimique (19), à l'intérieur de cette plante de test (2) appartenant au cas d'apprentissage (23),
**caractérisé en ce que**
chacun des cas d'apprentissage (23) étant produit en mettant d'abord la plante de test (2) appartenant au cas d'apprentissage (23) dans un état physiologique prédéterminé puis, tandis qu'un rayonnement électromagnétique irradie la plante de test (2) et qu'un rayonnement électromagnétique réfléchi ou diffusé est émis par la plante de test (2), une image hyper-spectrale (1) de la plante de test (2) est généré avec la caméra (15) de l'appareil de mesure (24), une analyse chimique (19) étant effectuée pour la mesure des concentrations de matières (20) dans la plante de test (2), les données d'image (17) de l'image hyper-spectrale (1) de la plante de test (2) étant transmises au vecteur d'entrée (11) du cas d'apprentissage (23) et les concentrations de matières (20) de l'au moins une plante de test (2) étant transmise au vecteur de sortie (21) du cas d'apprentissage (23), les concentrations de matières (20) étant des concentrations (20) de substances nutritives, les substances nutritives interagissant avec le rayonnement électromagnétique irradiant la plante de test (2) et cette interaction influençant le rayonnement électromagnétique émis par la plante de test (2), la concentration (20) d'au moins une de ces substances nutritives étant trop faible pour permettre une mesure ou une détection de l'interaction de cette substance nutritive avec le rayonnement électromagnétique irradiant la plante de test (2) au moyen de la caméra (15).

2. Procédé d'apprentissage selon la revendication 1, **caractérisé en ce que** l'au moins une substance nutritive est un élément chimique sélectionné dans le groupe constitué du phosphore (P), du potassium (K), du magnésium (Mg), du calcium (Ca), du soufre (S), du cuivre (Cu), du bore (B), du fer (Fe), du sélénium (Se), du sodium (Na), du zinc (Zn), du molybdène (Mo).

3. Procédé d'apprentissage selon l'une des revendications précédentes, **caractérisé en ce que** les données d'image (17) d'une image hyper-spectrale (1) d'une plante de test (2) sont attribuées, au moyen d'une unité de traitement d'image (16), à une partie de plante de cette plante de test (2), plus particulièrement à une feuille (7) de cette plante de test (2) et, à partir de ces données d'image (17), une pluralité de vecteurs d'entrée (11) sont générés et, à partir des concentrations de matières (20) mesurées dans cette partie de plante, un vecteur de sortie (21) est généré, chacun des vecteurs d'entrée (11) étant ensuite combiné avec le vecteur de sortie (21) correspondant à chaque cas d'apprentissage (23).

4. Procédé d'apprentissage selon l'une des revendications précédentes, **caractérisé en ce qu'**au moins un point d'image à l'intérieur de l'image hyper-spectrale (1) de la plante de test (2) est utilisé comme un point d'image de référence (40) prédéterminé de manière fixe pour une correction spectrale de l'éclairage de l'image (1), les données d'image (17) des points d'image (10) de l'image (1), qui sont différentes de l'au moins un point d'image de référence (40), étant normalisées à l'aide de données d'image (17) de l'au moins un point d'image de référence (40).

5. Procédé d'apprentissage selon la revendication 4, **caractérisé en ce que**, dans un espace observé par la caméra (15) de l'appareil de mesure (24), un corps de référence (39) avec des propriétés optiques prédéterminées est positionné de façon à ce que l'au moins un point d'image de référence (40) se trouve à l'intérieur d'une zone d'image de l'image hyper-spectrale (1) de la plante de test (2), englobée par le corps de référence (39).

6. Procédé d'apprentissage selon l'une des revendications précédentes, **caractérisé en ce que** les points d'image (41) de l'image hyper-spectrale (1) de la plante de test (2) qui n'appartiennent pas à la plante de test (2) sont détectés.

7. Appareil de mesure hyper-spectral (24) pour la détermination de concentrations de matières (20) dans au moins une plante (25) avec une caméra (15), qui est conçue pour prendre une image hyper-spectrale (1) de l'au moins une plante (25) et de la convertir en données d'image (17), une unité d'analyse (18) de l'appareil de mesure (24) étant conçue pour calculer, à partir des données d'image (17) de l'image hyper-spectrale (1), les concentrations de matières (20) dans l'au moins une plante (25) au moyen d'un algorithme d'analyse adaptatif, **caractérisé en ce que** l'algorithme d'analyse a été calibré au moyen d'un procédé d'apprentissage selon l'une des revendications précédentes.

8. Appareil de mesure (24) selon la revendication 7, **caractérisé en ce que** l'unité d'analyse (18) comprend une unité de traitement d'image (16) qui est conçue pour attribuer les données d'image (17) de l'image hyper-spectrale (1) de l'au moins une plante (25) à des structures cibles, plus particulièrement des structures de parties de plantes de l'au moins une plante (25).

9. Appareil de mesure (24) selon l'une des revendications 7 ou 8, **caractérisé en ce que** l'unité d'analyse (18) ou une unité de traitement d'image (16) de l'appareil de mesure (24) est conçue, du point de vue du programme, pour détecter les points d'image (41) de l'image hyper-spectrale (1) qui n'appartiennent pas à cette plante (25), comme n'appartenant pas à cette plante (25).

10. Appareil de mesure (24) selon l'une des revendications 7 à 9, **caractérisé en ce que** l'unité d'analyse (18) de l'appareil de mesure (24) est conçue, du point de vue du programme, pour normaliser, à l'aide des données d'image (17) d'au moins un point d'image (10) prédéterminé de manière fixe comme un point d'image de référence (40) de l'image hyper-spectrale (1), les données d'image (17) des points d'image (10) de cette image (1), qui sont différents de cet au moins un point d'image de référence (40), pour une correction d'éclairage.

11. Appareil de mesure (24) selon la revendication 10, **caractérisé en ce que** l'appareil de mesure (24) comprend un corps de référence (39) avec des propriétés optiques prédéterminées, qui est positionné à l'intérieur d'une zone observée avec la caméra (15), de façon à ce que l'au moins un point d'image de référence (40) se trouve à l'intérieur de la zone, englobée par le corps de référence (39), de l'image hyper-spectrale (1) prise avec la caméra (15).

12. Appareil de mesure (24) selon la revendication 10 ou 11, **caractérisé en ce que** l'algorithme d'analyse est implémenté sous la forme d'un réseau neuronal artificiel, l'unité d'analyse (18) étant conçue, en ce qui concerne le programme, pour effectuer, lors d'une analyse d'une couche d'entrée ou d'une couche dissimulée du réseau, la normalisation des données d'image (17) pour la correction spectrale de l'éclairage.

13. Appareil de mesure (24) selon l'une des revendications 7 à 12, **caractérisé en ce que** l'unité d'analyse (18) est conçue pour déterminer, à partir des concentrations de matières (20) calculées, dans l'au moins une plante (25), une composition et/ou une quantité d'un moyen de production, plus particulièrement d'un engrais, d'un produit phytosanitaire ou d'eau, pour l'au moins une plante.

14. Appareil de mesure (24) selon la revendication 13, **caractérisé en ce que** l'appareil de mesure (24) comprend un générateur de signaux (26) pour la génération d'un signal de commande pour la commande d'un dispositif (31 ; 36) pour la distribution d'un moyen de production, plus particulièrement d'un engrais, d'un produit phytosanitaire ou d'eau, moyennant quoi, dans le signal de commande, la quantité et/ou la composition du moyen de production est codé pour l'au moins une plante (25).

15. Dispositif (31 ; 36) pour la distribution d'un moyen de production, en particulier d'un engrais, d'un produit phytosanitaire ou d'eau, **caractérisé en ce qu'**il comprend un appareil de mesure (24) selon la revendication 14 ainsi qu'une unité de commande (29) pour la réception et le traitement du signal de commande de l'appareil de commande (24).
